# EUROPEAN PATENT APPLICATION

(11) **EP 1 580 047 A1**
(43) Date of publication of application: **28.09.2005**
(21) Application number: 05251338.9
(22) Date of filing: 07.03.2005
(51) Int. Cl.: B60G 21/055, B60G 11/18, F16F 1/14, C23C 4/00, B22F 3/115

(54) **Thermal spray reinforcement of a stabilizer bar**

(30) Priority: 25.03.2004 US 808753
(71) Applicant: Meritor Suspension Systems Company, U.S., Michigan 48084 (US)
(72) Inventor: Yue, Stephen, Montreal, Quebec H4A 3H3 (CA); Kleckner, Mark, Roseville, Michigan 48066 (US); Bechard, Maurice, Tupperville, Ontario N0P 2M0 (CA); Fader, Joseph, Brighton, Michigan 48114 (US); Lopes, Luiz, Canton, Michigan 48187 (US); Elders, William, Chatham, Ontario N7M 5P4 (CA); Sowinski, Timothy, Chatham, Ontario N7L 2T4 (CA); Madeires, Leo, Guelph, Ontario N1G 1P4 (CA); Kiousis, Pete, Birmingham, Michigan 48009 (US)
(74) Representative: Jones, John Bryn

(57) **Abstract**

A manufacturing process produces a stabilizer bar having a thickened, reinforced portion formed by thermal spraying a molten metal onto a surface of the bar. The process produces a stabilizer bar having a thickened portion in the areas typically subject to fatigue failure while avoiding the addition of unnecessary material and weight to other locations of the stabilizer bar not needing reinforcement. In one example, the unprocessed bar stock is thermally sprayed in desired locations. The thermally sprayed bar is formed into a desired shape and heat treated. The heat treated, formed, and sprayed bar is shot peened. Alternatively, the bar is thermally sprayed after the surface has been prepared by shot peening. Forming of the bar may also occur before thermal spraying, and pretreated bar stock may also be used.

## Description

### BACKGROUND OF THE INVENTION

The present invention relates to a stabilizer bar, and more particularly, the invention relates to reinforcing particular areas of a stabilizer bar.

Stabilizer bars are used in vehicle applications to provide lateral stability to a vehicle during turning maneuvers. The stabilizer bars are manufactured using a process that often results in concentration of stresses in locations along the stabilizer bar. The areas of the stabilizer bar having the stress concentrations are more susceptible to fatigue failure. As a result, prior art stabilizer bars may utilize a larger diameter along the entire length of the bar to provide sufficient thickness in typically weak areas of the bar. Using a larger diameter in areas other than those having the stress concentration results in a heavier bar than necessary, which adds weight and cost to the stabilizer bar.

Other prior art stabilizer bars attempt to provide additional strength in weak areas typically subject to fatigue failure by providing complex geometries or cross-sections that vary along the length of the stabilizer bar. While these stabilizer bar arrangements may be effective in improving the overall fatigue life of the stabilizer bar, the bar may be difficult to process due to the complex shape of the bar. In particular, it is difficult to achieve a stabilizer bar having complex geometries since stabilizer bars are typically constructed using solid bar stock having a uniform circular cross-section.

Therefore, what is needed is a stabilizer bar having areas typically subject to fatigue failure reinforced without increasing the size and weight of the bar in other areas of the stabilizer bar requiring less strength.

### SUMMARY OF THE INVENTION

The inventive manufacturing process produces a stabilizer bar having a thickened, reinforced portion formed by thermal spraying a molten metal onto a surface of the bar. The inventive manufacturing process produces a stabilizer bar having a thickened portion in the areas typically subject to fatigue failure while avoiding the addition of unnecessary material and weight to other locations of the stabilizer bar not needing reinforcement. Furthermore, inexpensive bar stock having a circular cross-section may be used.

The step of thermal spraying the molten material onto the surface of the bar may be incorporated in any number of suitable points during the manufacturing process. In one example, the unprocessed bar stock may be thermally sprayed in desired locations. The thermally sprayed bar may then be formed into a desired shape and heat treated. The heat treated, formed, and sprayed bar may then be shot peened. Alternatively, the bar may be thermally sprayed after the surface has been prepared by shot peening. Forming of the bar may also occur before thermal spraying, and pretreated bar stock may also be used.

These and other features of the present invention can be best understood from the following specification and drawings, the following of which is a brief description.

### BRIEF DESCRIPTION OF THE DRAWINGS

Figure 1A schematically depicts one example of an inventive stabilizer bar manufacturing process.
Figure 1B depicts the thermally sprayed inventive stabilizer bar.
Figure 2 schematically depicts another example stabilizer bar manufacturing process.
Figure 3 schematically depicts yet another inventive stabilizer bar manufacturing process.
Figure 4 schematically depicts still another example inventive stabilizer bar manufacturing process.

### DETAILED DESCRIPTION OF THE PREFERRED EMBODIMENT

The inventive stabilizer bar manufacturing process uses thermal spraying to produce a thickened portion of the bar providing increased strength and reinforcement in that portion as compared to other thinner portions of the bar. The inventive thermal spraying stabilizer bar manufacturing process effectively provides localized reinforcement of the bar without increasing the complexity of the manufacturing process or requiring expensive, specially shaped bar stock. The thermal spraying step may be incorporated at any number of suitable points in the stabilizer bar manufacturing process, however, the point at which the stabilizer bar is thermal sprayed is influenced by a number of considerations, which will be discussed in more detail below.

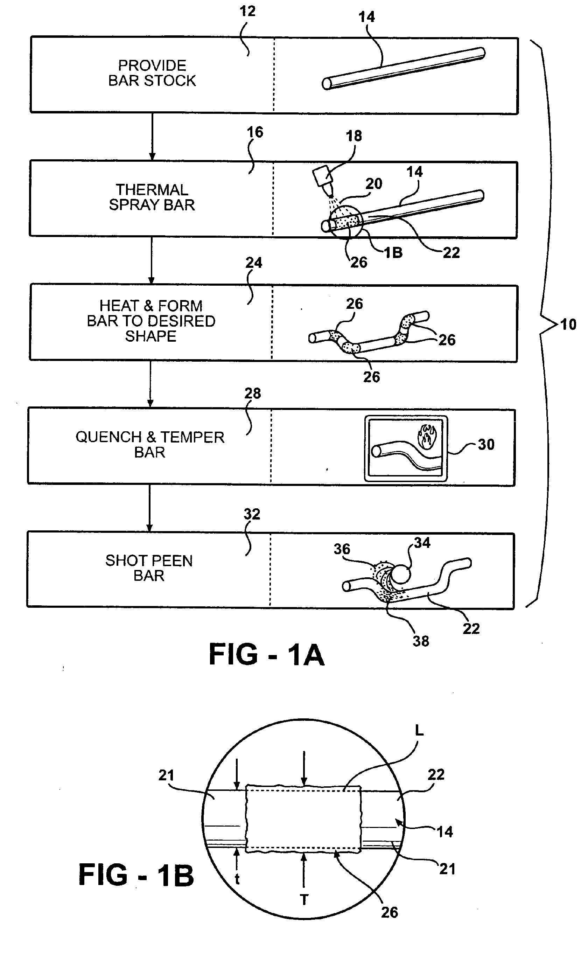

One example manufacturing process 10 is shown in Figure 1A. The process 10 includes providing a bar stock 14, as indicated at 12. The bar stock 14 is thermally sprayed, as indicated at 16, in areas typically subject to fatigue failures. Molten metal 20 is sprayed from a thermal spray gun 18 onto a surface 22 of the bar 14 to provide a thickened portion 26. The molten metal quickly cools upon contact with the surface 22. Referring to Figure 1B, the thickened portion 26 has a diameter T that is greater than a diameter t of a portion 21 adjacent to the thickened portion 26. The thickened portion 26 is achieved by depositing a layer of metal L on the surface 22 of the bar 14. In one example, the molten metal 20 is steel.

Returning to Figure 1A, the bar is hot formed into a desired shape, as indicated at 24. The formed and reinforced bar 14 is quenched and tempered, as indicated at 30, to reduce the hardness and increase the toughness of the bar by changing the structure of the martensite.

The process of thermal spraying the bar, forming, and heat treating the bar, results in stress concentrations that would otherwise reduce the strength of the bar. The bar is shot peened as indicated at 32 by directing shot or balls 36 from an impeller or nozzle 34 at high velocity at the surface 22 of the bar. Shot peening plastically deforms the surface 38 imparting beneficial compressive residual stresses, which increases the strength of the bar.

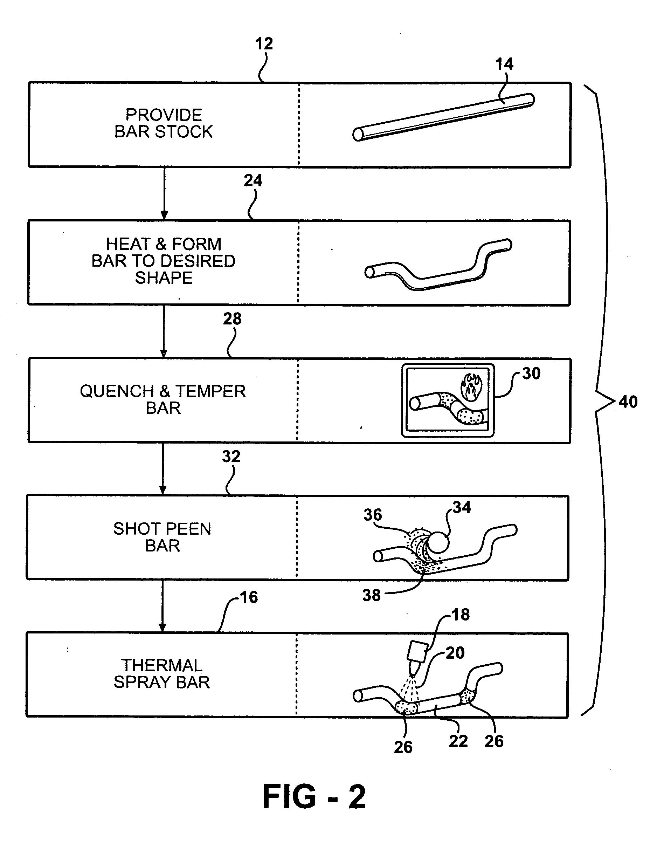

Another inventive stabilizer bar manufacturing process is shown in Figure 2. The bar stock 14 is provided, as indicated at 12. The bar stock 14 is hot formed into a desired shape, as indicated at 24 and quenched and tempered, as indicated at 28. Once the stabilizer bar has been heat treated, the surface of the stabilizer bar is shot peened as indicated at 32, to impact compressive residual stresses. While it may be desirable to shot peen the bar after the thermal spraying, it may also be desirable to shot peen the bar prior to thermal spraying to clean and roughen the surface of the stabilizer bar preparing the surface 22 to receive the molten metal 20. The stabilizer bar is thermally sprayed, as indicated at 16, to produce thickened portions 26. Various parameters of the thermal spraying process may be adjusted or controlled to ensure that the deposit of molten metal 20 onto the surface 22 does not undesirably change the phase of the stabilizer bar steel or reintroduce surface stress. High temperatures from the molten metal could make the surface brittle. The temperature of the molten metal, type of metal, and rate of deposit of the metal is selected to avoid temperatures that would be too high.

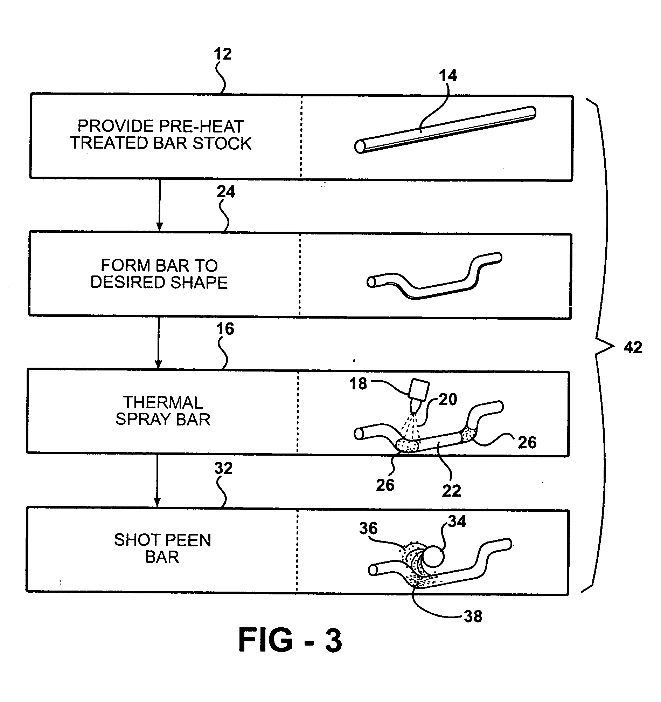

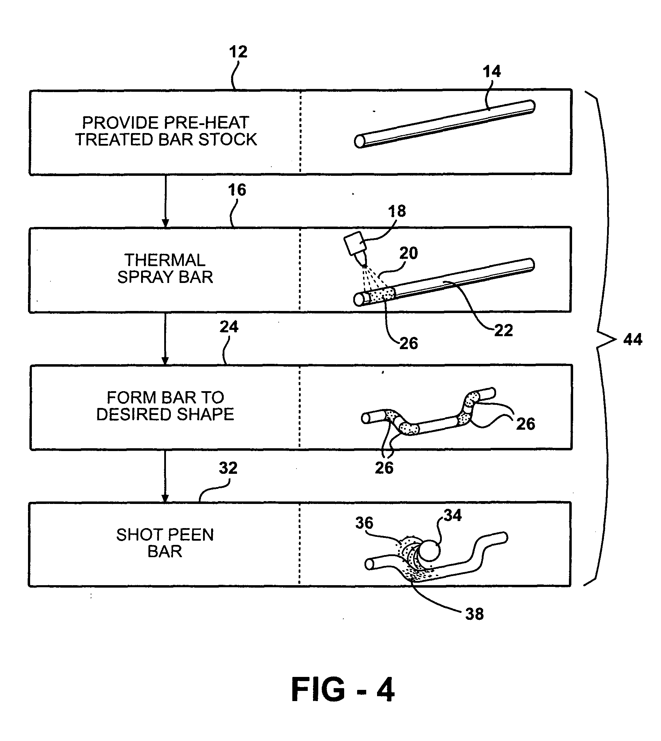

Figures 3 and 4 schematically depict a stabilizer bar manufacturing process in which a pre-heat treated bar stock 14 is provided, as indicated at 12. Referring to Figure 3, the bar stock 14 is formed to a desired shape, as indicated at 24. The formed stabilizer bar is thermally sprayed in desired areas to form thickened portions 26. The stabilizer bar is shot peened, as indicated at 32.

Still another inventive manufacturing process 44 is shown in Figure 4. A pre-heat treated bar stock is thermal sprayed, as indicated at 16, to produce thickened portions 26. The bar is formed to a desired shape, as indicated at 24. The formed stabilizer bar is shot peened, as indicated at 32.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of manufacturing a stabilizer bar comprising the step of thermal spraying a surface of a bar forming a thickened portion of the bar on the surface relative to another portion of the bar.

2. The method according to claim 1 comprising the step of shot peening the bar subsequent to the thermal spraying step.

3. The method according to claim 2 comprising the step of heat treating the bar between the thermal spraying and shot peening steps.

4. The method according to claim 3 comprising the step of forming the bar into a desired stabilizer bar shape between the thermal spraying and heat treating steps.

5. The method according to claim 2 comprising the step of forming the bar between the thermal spraying and shot peening steps.

6. The method according to claim 5 wherein the bar is heat treated.

7. The method according to claim 1 comprising the step of forming the bar into a desired stabilizer bar shape prior to the thermal spraying step.

8. The method according to claim 7 comprising the step of shot peening the bar subsequent to the thermal spraying step.

9. The method according to claim 7, wherein the bar is pre-heat treated.

10. The method according to claim 7 comprising the step of heat treating the bar between the forming and thermal spraying steps.

11. The method according to claim 7 comprising the step of shot peening the bar between the forming and thermal spraying steps.

12. The method according to claim 11 comprising the step of heat treating the bar between the shot peening and forming steps.

13. The method according to claim 2 comprising the step of heat treating the bar prior to the thermal spraying and shot peening steps.

14. The method according to claim 2 comprising the step of forming the bar into a desired stabilizer bar shape prior to the shot peening step.

15. The method according to claim 1 comprising the step of forming the bar into a desired stabilizer bar shape subsequent to the thermal spraying step.

16. A stabilizer bar having a portion with a first diameter and a thickened portion adjacent to said portion with a second diameter greater than said first diameter, said thickened portion including said portion and a layer of metal deposited on said portion reinforcing said portion.
